# EUROPEAN PATENT APPLICATION

(11) **EP 1 486 253 A1**
(43) Date of publication of application: **15.12.2004**
(21) Application number: 04013642.6
(22) Date of filing: 09.06.2004
(51) Int. Cl.: B01J 8/04, C01B 3/38, C01B 3/56

(54) **Reformer with an Hydrocarbon absorber**

(30) Priority: 11.06.2003 US 458625
(71) Applicant: NISSAN TECHNICAL CENTER NORTH AMERICA, Inc., Farmington Hills Oakland County MI 48331-3487 (US)
(72) Inventor: Kamijo, Motohisa, Zushi-shi Kanagawa-ken (JP)
(74) Representative: Weber, Joachim, Dr.

(57) **Abstract**

A fuel reformer for use with a fuel cell system is combined with an absorber to absorb unreacted hydrocarbon fuel at a first temperature and release the unreacted hydrocarbon fuel at a second temperature, and subsequent burning of the unreacted hydrocarbon in a burner downstream. The absorber, such as a zeolite, is effective to increase efficiency of the reformer and fuel cell especially under low temperature or start-up conditions.

## Description

### Field of the Invention

This invention relates to a reformate purifying system for fuels and more particularly relates to a reformate system for purifying hydrogen fuel for fuel cells.

Fuel cells have been developed as alternative power sources such as for electrical vehicles. A fuel cell is a demand-type power system in which the fuel cell operates in response to the load imposed across the fuel cell. Typically, a liquid hydrogen containing fuel, for example, gasoline, methanol, diesel, naphtha, etc. serves as a fuel supply for the fuel cell after the fuel has been converted into a gaseous stream containing hydrogen. The conversion to the gaseous steam is usually accomplished by passing the fuel through a fuel reformer to convert the liquid fuel to a hydrogen gas stream that usually contains other gases such as carbon monoxide, carbon dioxide, methane, water vapor, oxygen, and unburned fuel. The hydrogen is then used by the fuel cell as a fuel in the generation of electricity for the vehicle.

A typical problem in such fuel reforming systems is to produce a fuel to be supplied to the fuel cell in sufficient purity to allow the fuel cell to operate at a high efficiency. Typically, there is incomplete combustion in the reformer so that the gases emanating from the reformer are subjected to a water shift reaction by which carbon monoxide and hydrogen rich gas is further reacted to increase the percentage of hydrogen present. Even with this conversion however, there remains a need to increase the purity of the gases being delivered to the fuel cell to increase the hydrogen content which increases the efficiency of the fuel cell.

### Summary of the Invention

It is accordingly an object of the present invention to provide a fuel reformer system which supplies a highly pure hydrogen gas stream to the fuel cell to increase efficiency of the fuel cell.

A further object of the invention is to provide a reformate purifying system which is effective to substantially purify the gases from the reformer so as to increase the concentration of hydrogen in the gases being fed to the fuel cell, especially during the start-up phase of the fuel cell system.

A further object of the invention is to provide a reformate purifying system by which hydrocarbon fuels can be substantially reformed to produce a gas having a high concentration of hydrogen, which system is adapted for use as an on-board system in a vehicle in combination with a fuel cell.

Other objects and advantages of the present invention will become apparent as the description thereof proceeds.

In satisfaction of the foregoing objects and advantages, the present invention provides a fuel reforming system for reforming hydrocarbon fuel in a fuel cell system to produce a gaseous stream having a high concentration of hydrogen to be supplied to a fuel cell stack. The fuel reforming system preferably comprises a fuel reformer, a water shift gas reactor, an absorber for absorbing hydrocarbons generated by the fuel reformer under a first set of conditions, e.g., a first temperature, and subsequent release of the hydrocarbon gases under a second set of conditions, e.g., a second temperature; and a burner to purify the released hydrocarbons. In a preferred embodiment, the fuel reforming system of the invention is adapted for use as an on-board fuel cell in a vehicle.

This system is adapted for use with a fuel cell in which the purified gases are then forwarded to the anode of a fuel cell stack for the generation of electricity. In the preferred embodiment, the absorber is an inorganic porous zeolite material.

The present invention also provides an automated system for processing of hydrocarbon gases in the refuel reformer purifying system.

### Brief Description of the Drawings

Reference is now made to the drawings accompanying the application wherein:

Fig. 1 illustrates a zeolite material for use as an absorber which has a three-dimensional molecular cell structure;

Fig. 2 is a graph which shows hydrocarbon concentration at the outlet as the gas flow temperature rises when hydrocarbon fuel is passed through a reactor coated with a zeolite;

Fig. 3 is a flow diagram showing one embodiment of the invention for reforming hydrocarbon fuel and treatment of the reformed material with a water shift reactor followed by zeolite treatment for introduction of reformed fuel into a fuel cell.

Fig. 4 is a flowchart illustrating operation of the process of Fig. 3 from start-up to normal operation;

Fig. 5 is a flowchart showing operation of the process of Fig. 3 during normal operation; and

Fig. 6 is a flow diagram of a second embodiment of the invention showing the operation of the fuel reformer with the hydrocarbon absorption function to provide fuel to the fuel cell.

### Description of the Invention

The present invention is concerned with operation of a fuel cell, and more particularly with improvements to fuel reformers which supply hydrogen to a fuel cell system. According to the present invention, it has been discovered that the combination of the fuel reformer with an absorber for absorbing hydrocarbon (HC) from the gas stream generated by the reformer with the subsequent release and burning of the hydrocarbon, serves to substantially purify the mixture of gases recovered from the reformer prior to introduction of the gases into a fuel cell system, especially during operating temperatures lower than normal. The fuel cell purifying system of the present invention is particularly adapted for small scale operation and optimally serves as reforming system in a fuel cell generating device used in vehicles such as automobiles.

In fuel cell systems, a reformer is provided which is effective to reform hydrocarbon fuels into a hydrogen rich fuel for introduction into the fuel cell. Typically, a reformer is combined with a shift reaction section to perform a water gas shift reaction for further conversion. In the water gas shift reaction, the hydrogen rich gas emanating from the reformer is reacted with water to shift the carbon monoxide in the gas to hydrogen and carbon dioxide, and thereby increase hydrogen content of the hydrogen rich gas.

According to the present invention, it has been discovered that if the hydrogen rich gas provided by the reformer system is subjected to an absorption step to absorb unreacted hydrocarbon, with the subsequent release of the hydrocarbon and purification of the gas stream by combustion, that the hydrogen content of the hydrogen rich gases being provided to the fuel cell will be substantially increased. Thus the present invention provides a novel fuel reformer system, the combination of the fuel reformer system with a fuel cell and the methods for treating hydrocarbon fuels to substantially increase the hydrogen content in the gas stream and improve the efficiency of the fuel cell system.

The absorbent of the present invention is particularly effective during warm-up of the reformer system when operating temperatures are lower. At these lower temperatures of below about 200°C., at startup and in initial reform operation, unconverted or unreformed fuel flows out of the reformer as unreacted hydrocarbon downstream of the reformer without being completely reformed because the ideal mix of fuel, air, and water cannot be obtained. Since there is a discrepancy between the target supply quantities of fuel, air, and water in the actual supply quantities, there is substantial unreacted hydrocarbon in the system. The out flowing hydrocarbon flows out of the system without being purified by oxidation, since the downstream reactor burner is not sufficiently warmed up. In reform operation, since there are amounts of outflow hydrocarbon, sufficient hydrocarbon conversation efficiency cannot be acquired in the early stages of the reformer operation.

The present invention solves this startup problem by providing an absorber downstream of the reformer. The absorber functions to absorb unreacted hydrocarbon contained in the gases emanating from the reformer at the lower startup temperatures. Once the system reaches operating temperatures of above 200°C., the hydrocarbon gases are released by the absorber to the system. The released hydrocarbons are preferably further reacted with oxygen to produce additional hydrogen for introduction into the fuel cell.

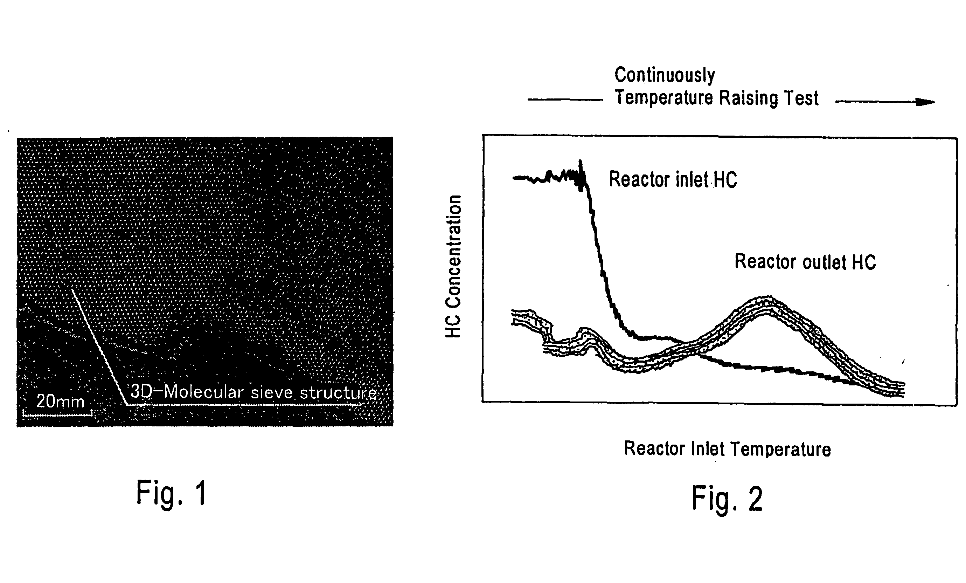

In an important feature of the present invention, the absorption section is provided wherein an absorbent material is maintained which is suitable to absorb unreacted hydrocarbon from the fuel reforming system. The preferred absorber is a zeolite material. Fig. 1 illustrates a typical zeolite structure. Zeolites are well known and are generally hydrous aluminum-sodium silicates in the form of porous granules. The zeolites are also known as molecular sieves which contain pores in the Angstrom size. The preferred zeolite of the present invention has a three dimensional molecular structure of a size physically suitable to absorb hydrocarbon gases emanating from the reforming system. The zeolite is also durable when used in a fuel reforming system and is preferably provided as a coating in a honeycomb substrate reactor.

According to this invention, the hydrocarbons from the reforming system are temporarily absorbed in the zeolitic molecular structure at low temperature and are subsequently released from the absorbent by thermal motion when the environment reaches an elevated or higher temperature. Since the absorbent such as a zeolite is a complex oxide containing silica and aluminum as its main constituents, and contains substantially no precious metals or transition material, no reaction of the gases of consequence occurs within the absorbent to affect the reform reaction.

As shown in Fig. 2, the hydrocarbon concentration at the outlet falls due to absorption at low temperature and the hydrocarbon is then released as the temperature rises. When the inlet gas temperature is increased, the outlet concentration of the hydrocarbon becomes higher than the inlet concentration due to the release of the hydrocarbon.

The hydrocarbon recovered from the absorbent reactor is then purified by combustion using a burner located downstream of the absorbent material. This serves to substantially increase the hydrogen concentration in the gases for introduction into the fuel cell.

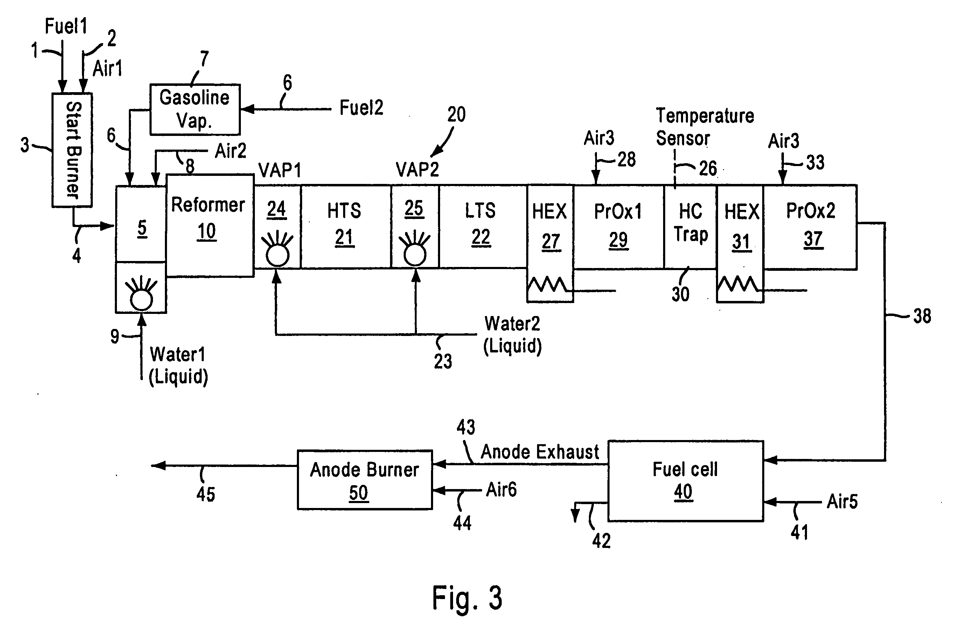

Reference is now made to Fig. 3 which is a flow sheet illustrating operation of one embodiment of the reforming purifying system of this invention, including use of the absorber section. With reference to Fig. 3, it will be seen that generally the system provides a reformer 10, a water shift reactor 20, the absorbent reactor 30 (HC Trap), fuel cell 40, and the anode burner 50. In operation, the fuel 1 from line 1 and air from line 2 are introduced into start burner 3 initiate the reaction. The fuel is principally gasoline, but as is well known in the art, other fuels can be reformed to form hydrogen gas in such reformer reactions. Typical fuels include gasoline, methanol, diesel, and naphtha, all of which are well known. Fuels are typically used which can be subjected to a reformer reaction to produce a mixture containing sufficient hydrogen to serve as fuel for a fuel cell.

In the embodiment of the invention shown in Figure 3, gases from the start burner 3 are introduced by line 4 into premixing chamber 5 of the reformer. In this chamber, additional fuel 2 (gasoline) is introduced from line 6 after vaporization in heater 7 together with heated air from line 8 and water 1 in liquid form from line 9, to provide the fuel for reformer 10. Reformer 10 may be of any desired structure as is well known in the art. It is preferred that the reformer be provided with a reforming chamber which may or may not contain a catalyst as is well known to the art. In the reforming section, the fuel such as gasoline is reformed to produce hydrogen rich gas by reaction at a high temperature of at least 650°C. The product from the reformer is a mixture of gases including a substantial amount of hydrogen as is known in the art. Thus, the reformer is the reactor that reforms the fuel primarily to carbon monoxide and hydrogen by addition of small quantities of oxygen, air and water to the fuel and causing the reaction to occur under high temperatures. Preferred operating temperatures in the reformer are above 650°C and preferably between 650°C and 900°C. As noted, the reformer may be either a catalytic reformer utilizing a metallic catalyst or a may be a non-catalytic reformer. At startup however, reformer temperatures will be substantially below the preferred operating temperature of 650°C, e.g., in the range of 150°C. to 650°C.

The vapors produced by the reformer are then transferred to the water shift reactor to promote the shift reaction of carbon monoxide and water to carbon dioxide and hydrogen. The operating temperature for the water-shift reactor is in the range of 300°C to 500°C for the high temperature shift reactor (HTS) and 200°C to 350°C for the low temperature shift reactor (LTS). As shown in Fig. 3, HTS is the high temperature shift 21 and LTS is the low temperature shift 22. Water 2 from line 23 is introduced into each of the high temperature shift reactor 21 and low temperature shift reactor 22 after vaporization at heaters 24 and 25, respectively.

The mixture of gases leaving the low temperature reactor are then reduced in temperature by passing through heat exchanger 27 (HEX) in preparation for introduction into preferential oxidizer 29 (PrOx1). Air or oxygen (Air3) is then introduced to the oxidizer 29 by line 28. In the preferential oxidizer 29, carbon monoxide that did not react in the water shift reactor is further reacted with oxygen or air under hydrogen rich conditions to increase the hydrogen concentration in the gaseous mixture. The operating temperature in the preferential oxidizer is in the range of about 120 to180°C. for the reaction with oxygen which can be detected by temperature sensor 33.

From the first preferential oxidizer 29, a mixture of gases is then passed to hydrocarbon trap 30 for absorption of unreacted hydrocarbon components of the gases. Hydrocarbon trap 30 is basically a reactor comprising a substrate containing zeolite material. The structure of this reactor may be of any desired type although a preferred reactor is a honeycomb structure containing a zeolite coating thereon. Any type of absorbent zeolite may be used, but the zeolite is preferably a three-dimensional mass structure having suitable cavities for absorption of the hydrocarbon and will function to absorb the hydrocarbon at a first temperature and release the hydrocarbon at a second temperature. A preferred first temperature for the zeolite absorbent is in the range of 100 to 150°C., and a preferred second or desorption temperature is in the range of 200 to 300°C., preferably about 225-250°C.

The structure of the zeolite absorbent is complex but is generally a three-dimensional mass structure which comprises holes or cavities and windows which connect the cavities. These cavities are sufficiently large for the zeolite of the invention to absorb a few hydrocarbon molecules although a large amount of diffusion resistance is produced as these absorbed molecules pass through the window portion. This resistance defines the hydrocarbon absorbency and desorption force of the zeolite. For example, an MFI type zeolite has a structure of straight pores (0.51 x 0.55nm) and zigzag pores (0.54 x 0.56nm) which cross each other. The preferred zeolites for use in the invention are the MFI type zeolites and beta-type zeolites, all of which are well known in the art.

It is also important that the zeolites have sufficient durability to function as a fuel reforming material. Heat deterioration is a key issue with durability. Zeolites have the basic component molecules SiO₂ and Al₂O₃ which are combined in a certain manner which form the zeolite structure. SiO₂ and Al₂O₃ have a high heat resistance of at least 700°C. The zeolite structure has a base of SiO₂ but a small amount of Si is replaced with Al which thus provides higher durability against heat.

Since the location of the zeolite in this embodiment of the invention is at the preferential oxidizer, the operation temperature for the absorption is at 300°C. or lower so that zeolite absorbent durability is excellent in this environment.

It is also important that the zeolite not exhibit any substantial reaction with the components of the fuel. It is known of course, that nobel metals or transition metals can be provided in zeolites as a catalytic material to promote fuel reformation and reaction, shift reactions and preferential oxidizer reactions. However, the zeolite used in the hydrocarbon trap in this invention should not contain any substantial amount of such catalytic metals or other catalysts.

The MFI-type zeolite, developed by Mobil Oil Corporation, is an alumina silica zeolite with a high silica and low aluminum content. This type of zeolite is also known as ZSM-5 zeolites. Its structure is based on channels with intersecting tunnels. The aluminum sites are very acidic. It has been discovered according to the present invention that utilization of a zeolite such as the ZSM type or beta type zeolites in general provide excellent advantages as absorbers in the hydrocarbon trap system of this invention.

The gases in preferential oxidizer (PrOx) 29 are in the temperature range of about 120 to 180°C. As the gases move to hydrocarbon trap 30 (HC Trap) which contains the absorbent, unreacted hydrocarbon in the gases is absorbed into the zeolite absorbent during the startup phase at temperatures below about 200°C., usually about 100 to 150°C. At these lower temperatures during startup, the hydrocarbons are absorbed by the zeolite. Once normal operating temperatures are being achieved, the hydrocarbons are absorbed by the zeolite, usually at about 230-280°C. for the preferred zeolite absorbers.

In the system shown in Figure 3, at startup or lower temperatures, the hydrocarbons are absorbed in the zeolite at 30. The non-absorbed gases then pass through heat exchanger 31 and are introduced into the second preferential oxidizer 37 (PrOx2). In the second oxidizer, air is introduced via line 33 (Air 4) to oxidize additional CO in the hydrogen-rich atmosphere. During this startup phase, the gaseous stream from oxidizer 37 which is rich in hydrogen and low in unreacted hydrocarbons, is then passed by line 38 to fuel cell 40 where it is mixed with air from line 41 (Air 5) to power the fuel cell stack. Waste gases are removed from the fuel cell by line 42. The anode exhaust from fuel cell 40 is sent via line 43 to anode burner 50 where the gases are burned in the presence of air from line 44 (Air 6) and exhausted to the atmosphere at 45.

Once the reforming system reaches a temperature at which operating conditions are near normal, the absorber will desorb the hydrocarbon from its pores for further conversion of the hydrocarbon in oxidizer 37 by reaction with oxygen. Additional hydrogen formed then further enriches the hydrogen gas fuel to fuel cell 40.

Since the preferred zeolite absorber is a MF1 type zeolite, the hydrocarbon will be desorbed from the zeolite at a temperature in the range of about 250°C. Obviously, this desorption temperature will vary depending on the pore and/or window size of the zeolite. The absorber or HC Trap 30 is provided with a temperature sensor 26 for such purposes. Since the hydrocarbon is usually desorbed at a temperature in the range of 200-280°C., it may need to be cooled by heat exchanger 31 for introduction into oxidizer 37 where the oxygen reaction is conducted at a temperature in the range of about 120° to 180°C.

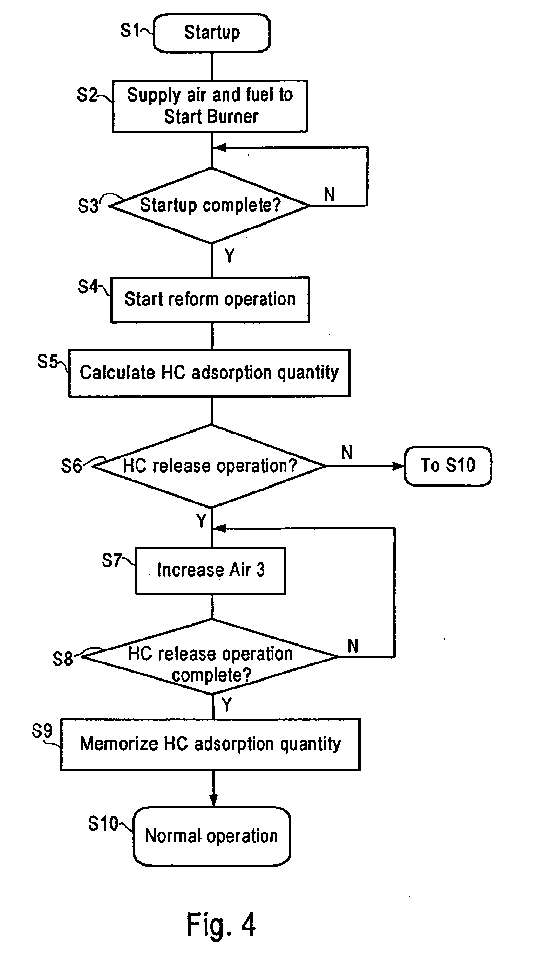

The operation of the fuel reformer with the absorption function of Fig. 3 is illustrated in Fig. 4. As may be understood, this operation is computer controlled for optimum results in operation.

As may be seen in Fig. 4, and with reference to Fig. 3, start-up operation begins at S1 where fuel and air are supplied to the start burner 3 at S2. At S3, the start up is judged complete when the target temperature is reached as far as the anode burner. The start reform operation is then initiated at S4 at which time the supply of fuel 1 and air 1 is stopped and fuel 2, air 2-6 and water 1 and 2 are supplied in response to the operation request to initiate the reformer operation at 10. At S5, the hydrocarbon release quantity per start up is predetermined by experiment and the data entered. The hydrocarbon absorption quantity is calculated by adding the present hydrocarbon release quantity to the previously used hydrocarbon absorption quantity stored in memory. If the calculated hydrocarbon absorption quantity exceeds the predetermined allowable hydrocarbon absorption quantity at S6, absorbed hydrocarbon is released and purified. If the calculated hydrocarbon absorption quantity does not exceed the predetermined hydrocarbon absorption quantity, the operation shifts to normal operation (S10) to prevent wasteful consumption of hydrogen due to the hydrocarbon release purification process.

If the calculated hydrocarbon absorption quantity exceeds the predetermined allowable hydrocarbon absorption quantity, the supply of air 3 is increased (S7) thus causing oxygen and air to react with the hydrogen and carbon monoxide in the reformed gas, and raising the inlet temperature of the hydrocarbon absorption material to 250°C. The quantity of air supply increase is predetermined by experiment and the data entered.

At S8, the necessary time for hydrocarbon release is judged by the computer. In the present case, the necessary time for hydrocarbon release is predetermined by experiment in the lab and the lapse of a fixed time is measured. The released hydrocarbon is thereafter purified in the anode burner and the hydrocarbon absorption quantity is memorized as 0 at S9. The operation then shifts to normal operation at S10.

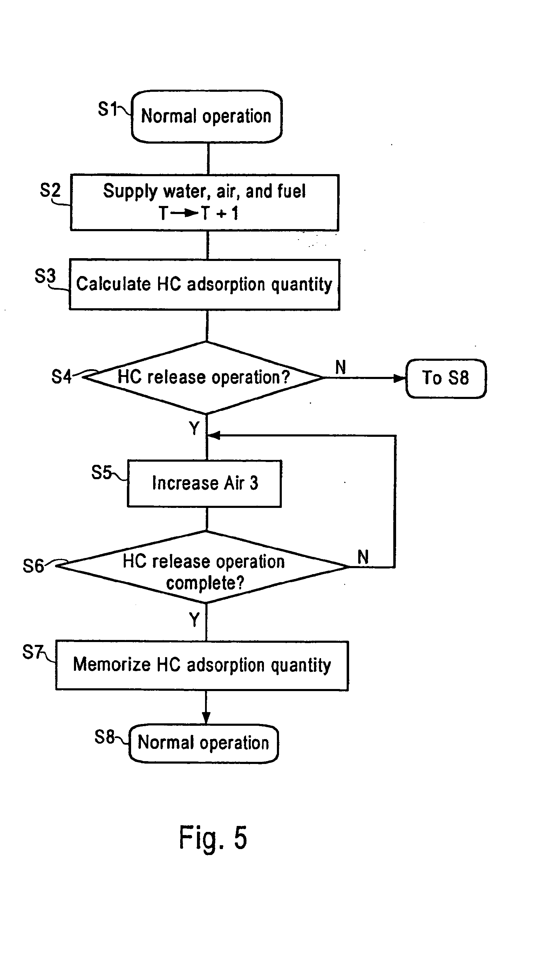

Once normal operation is achieved, the procedures are as set forth in Fig. 5. As shown in Fig. 5, normal operation starts at S1 and at S2, fuel 2, air 2-6 and water 1 and 2 are supplied in response to operation request. At the same time, counter T measures the elapsed time since normal operation of the system started, and advances the count by 1 per unit time. For example, if unit time is one second, counter T advances by 1 second. At S3, the quantity of hydrocarbon released per unit time in normal operation is predetermined by experiment and the data entered. The hydrocarbon absorption quantity is calculated based on the predetermined hydrocarbon absorption quantity and the time elapsed in normal operation as obtained from counter T, and is added to the previous hydrocarbon absorption quantity stored in memory.

As seen at S4, if the calculated hydrocarbon absorption quantity exceeds the predetermined allowable hydrocarbon absorption quantity, absorbed hydrocarbon is released and purified to S8. The hydrocarbon concentration which should be purified by the anode burner rises and the hydrocarbon can be removed efficiently. If the calculated hydrocarbon absorption quantity does not exceed the predetermined allowable hydrocarbon absorption quantity, normal operation is continued to prevent wasteful consumption of hydrogen due to the hydrocarbon release purification process.

Thereafter at S5, the supply of air 3 through line 28 is increased, thereby raising the inlet temperature of the hydrocarbon absorption material to 250°C. The quality of air supply increase is predetermined by experiment and stored in memory. At S6, the necessary time for hydrocarbon release is judged by the computer as in the present case, necessary time for hydrocarbon release is predetermined by experiment and lapse of fixed time is measured. The released hydrocarbon is purified in the anode burner.

At S7, the hydrocarbon absorption quantity is memorized as 0 and at the same time, the counter time is memorized as 0 and normal operation is continued at S8.

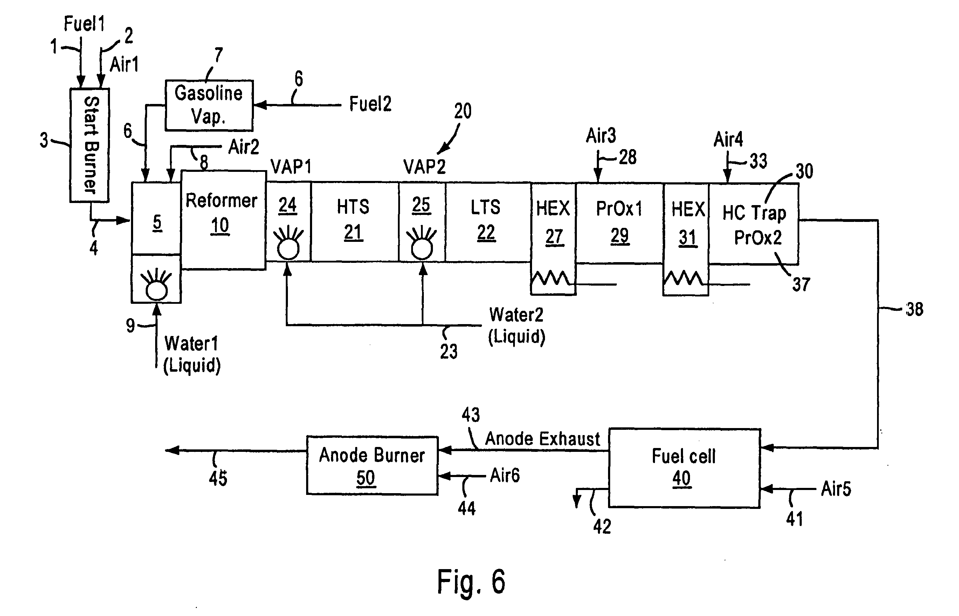

Reference is now made to Fig. 6 which provides an alternative operation of the invention and where like numerals in Fig. 6, make reference to the same elements in Fig. 5. In the process of Fig. 6, the absorbent or hydrocarbon trap (HCTrap) is provided in the second oxidizer 37 (PrOx2) rather than preferential oxidizer 24 (PrOx1). In this arrangement, additional hydrocarbon is converted to hydrogen and other gases in preferential oxidizer 24 as described for Figure 3 after which the gases are cooled in heat exchanger 31 and then passed to PrOx2 oxidizer 37 where the absorbent 30 (HC Trap) is located. During the start up period at low temperature, hydrocarbon gases are trapped and stored in the zeolite absorbent contained in the HCTrap in oxidizer 37. This allows the enriched hydrogen gases to pass by line 38 to fuel cell 40 for efficient operation of the fuel cell until such time as the preferential oxidizer and system comes to temperature. Once the oxidizer 37 reaches near normal operation temperature, e.g., above about 230°C., the hydrocarbon gases are released or desorbed by the zeolite and pass to the fuel cell 40 and are finally burned at anode burner 50 as described with respect to Fig. 3.

Reference is now made to the following examples to illustrate the invention but the invention is not to be considered as limited thereto.

### Example 1

In this example, gasoline is the hydrocarbon fuel and the hydrocarbon absorption reactor is provided downstream of the preferential oxidizer 1 as in Figure 3 to trap hydrocarbon generated due to the fact that at start up or during normal operation, the actual incoming quantities of fuel, air and water are different from the targeted supply quantities.

As described above with respect to start up operation in Fig. 4, the gasoline fuel is reformed in reactor 10 in the presence of oxygen to reform the fuel mainly to CO and H₂ by the addition of small quantities of oxygen and water to the fuel and cause a reaction at a high operating temperature, preferably above 650°C. The resulting mixture of gases is then subjected to the water-shift reaction to promote shift reaction of CO plus H₂0 to → CO₂ plus H₂. The operating temperature is 300°C to 500°C for the high temperature shift 21 and 200° to 350°C for the low temperature shift 22, as shown in Figure 3.

The gases from the water shift reactor then passed through cooling heat exchanger 23 to preferential oxidizer 24 where the gases are mixed with air 3 from line 25. This oxidizer selectively oxidizes the CO that did not react in the water-shift reactor by using oxygen in hydrogen rich conditions. The operating temperature in this oxidizer is about 120° to 180°C. In this example, since the warm up temperature of PrOx₂ oxidizer 37 is 150°C and the hydrocarbon absorption temperature of the zeolite is 230°C, hydrocarbon that is absorbed during warm up or normal operation is not released. The zeolite used in the absorber is an MFI type zeolite as described above in the form of a zeolite coating on a metal honeycomb substrate.

When warm up is complete, after the anode burner that oxidizes and combusts the hydrocarbon reaches its functioning temperature, the flow quantity of air 3 is increased causing oxygen in the air to react with CO and H2 in the reformed gas so that the outlet temperature of the first preferential oxidizer 24 is raised to 250°C and hydrocarbon is released and cleaned up by combustion in the anode burner.

Operation of this system is as described above with respect to Figs. 4 and 5.

### Example 2

In this example, the operation is as in Example 1 except that the zeolite coating as the absorbent is contained in preferential oxidizer 37 so that this oxidizer also acts as a hydrocarbon absorption reactor, as described with respect to Example 1 for the first preferential oxidizer 24. Otherwise, the operation is the same as in Example 1.

From the above description of the invention, it will be understood that the present invention solves the problems in start up and reform operations when fuel flows out as hydrocarbon downstream to the reformer without being completely reformed because the ideal mix of fuel, air and water cannot be obtained in the startup phase. This invention solves the problem of the discrepancy between the target supply quantity of fuel, air and water and the actual supply of quantities of these reactants. The outflowing hydrocarbon flows out of the reformer system without being purified by oxidation since the downstream burner is not sufficiently warmed up. Further in the reform operation, since there are required balances of outflow of hydrocarbon, sufficient hydrocarbon conversion efficiency cannot be acquired. The present invention overcomes these problems.

The present invention has been described herein with reference to certain preferred embodiments. However, as all of these obvious various thereon will become apparent to those skilled in the art, the invention is not to be considered as limited thereto.

## Claims

1. In a fuel reformer system which supplies hydrogen to a fuel cell by reforming hydrocarbon fuel, the improvement comprising a combination of the fuel reformer with an absorbent material which will absorb unreacted hydrocarbon from the reformer at a first temperature and release the absorbed hydrocarbon at a second temperature.

2. A fuel reformer system according to claim 1, wherein the absorbent material absorbs the hydrocarbon at a temperature of below about 200°C. and releases the absorbed hydrocarbon at a temperature of above about 200°C.

3. A fuel reformer system according to claim 1, in combination with a fuel cell wherein the fuel reformer supplies hydrogen to a fuel cell by reforming hydrocarbon fuel to a hydrogen gas stream.

4. A fuel reformer according to claim 1, wherein the absorbent material is located downstream of the reformer where reformed gas temperature in normal operation and heated gas temperature when warmed up are below the temperature at which the absorbent material releases hydrocarbon.

5. A fuel reformer system according to claim 1, wherein release of the hydrocarbon controls the temperature of the reformed gas by adding oxygen upstream of the absorbent material during reform operation.

6. A fuel reformer according claim 1, wherein the absorbent material comprises a zeolite having an inorganic pore structure.

7. A fuel reformer according to claim 6, wherein the zeolite is an MFI type zeolite.

8. A fuel reformer system for reforming hydrocarbon fuel in a fuel cell system comprising:
a) a fuel reformer;
b) an absorber for absorbing unreacted hydrocarbon downstream of the reformer, at a first temperature, and subsequent release of the hydrocarbon at a second temperature;
c) a fuel cell; and
d) a burner to combust the released hydrocarbon.

9. A fuel reformer system according to claim 8, wherein the reformer is a catalytic or non-catalytic reformer.

10. A fuel reformer according to claim 8, further comprising a water shift gas reactor downstream of the fuel reformer, which promotes the shift reaction of carbon monoxide and water to carbon dioxide and hydrogen.

11. A fuel reformer system according to claim 8, wherein the absorber functions to absorb hydrocarbon at a temperature of below about 200°C. and releases the hydrocarbon at a temperature of above about 200°C.

12. A fuel reformer system according to claim 11, wherein the absorber comprises a zeolite having an inorganic pore structure.

13. A fuel reformer system according to claim 12, wherein the zeolite is an MFI type zeolite.

14. A fuel reformer system according to claim 8, wherein the fuel reformer releases a hydrogen-rich gaseous stream containing hydrocarbons, the hydrocarbons are absorbed in an absorber from the gaseous stream at a first temperature, the remaining hydrogen-rich gaseous rich stream is passed to a fuel cell.

15. A fuel reformer system according to claim 14, wherein the absorber is a zeolite having an inorganic pore structure.

16. A fuel reformer system according to claim 15, wherein the zeolite is an MFI-type zeolite.

17. A fuel reformer system according to claim 15, wherein the absorbed hydrocarbon is released from the absorber at a second temperature, further oxidized to form additional hydrogen and passed to the fuel cell.

18. A fuel reformer system for reforming hydrocarbon fuel for use in a fuel cell system comprising:
a) a fuel reformer;
b) an absorber for absorbing and releasing unreacted hydrocarbon;
c) an oxidizer reactor;
d) a fuel cell; and
e) a combustion burner;
wherein unreacted hydrocarbon gases from the fuel reformer are absorbed in the absorber at a first temperature of less than about 200°C., and released by said absorber at a second temperature of above about 200°C, and wherein the released hydrocarbons are further oxidized in the oxidizer and passed to the fuel cell.

19. A fuel reformer system according to claim 18, comprising at least one watershift gas reactor downstream of the fuel reformer for conversion of carbon monoxide and water to hydrogen and carbon dioxide to increase the hydrogen content of the gas.

20. A fuel reformer system according to claim 18, wherein said absorber comprises a zeolite having a porous structure which will absorb hydrocarbon at a temperature of below 200°C. and release the hydrocarbon at a temperature of above about 200°C.

21. A fuel reformer system according to claim 20, wherein the zeolite is an MFI type zeolite.

22. A method for operating a fuel reformer system to provide a hydrogen rich gaseous stream to a fuel cell comprising:
a) reforming a hydrocarbon fuel in the presence of air and water to form a hydrogen containing gaseous stream;
b) passing said hydrogen-containing gaseous stream which contains unreacted hydrocarbon to an absorber which is effective to absorb unreacted hydrocarbons from the hydrogen-containing gaseous stream at a temperature of below about 200°C.;
c) passing unabsorbed hydrogen-containing gaseous stream to a fuel cell to provide hydrogen fuel to the cell.

23. A method according to claim 22, wherein the hydrogen-containing gaseous stream from the reformer is passed through a water shift gas reactor for reaction with water and carbon monoxide to produce additional hydrogen and carbon dioxide prior to introduction into the absorber.

24. A method according to claim 22, wherein prior to absorption, the hydrogen rich stream from the reformer is further reacted in one or more reactors to increase the hydrogen content of the stream prior to absorption in the absorber.

25. A method according to claim 19, wherein the temperature in the absorber is raised to a temperature above 200°C. to release the hydrocarbon contained in the absorber and passing the released hydrocarbon to fuel cell.

26. A method according to claim 22, wherein the absorber absorbs the hydrocarbon generated during reform; thereafter releases the absorbed hydrocarbon; and purifies the hydrocarbon by combustion using a burner located downstream.

27. A method according to claim 26, wherein the quantity of hydrocarbon absorbed in the absorber is detected in performing the hydrocarbon release operation.

28. A method according to claim 26, wherein the hydrocarbon absorber is located at a point in the flow path where reformed gas temperature in normal operation and heated gas temperature when warmed up are below the temperature at which the absorber releases hydrocarbon.

29. A method according to claim 26, wherein the absorber comprises a zeolite having an inorganic porous structure.

30. A method according to claim 29, wherein the zeolite is an MFI-type zeolite.

31. A method according to claim 22, wherein the fuel is gasoline, methanol, diesel, naphtha, or mixtures thereof.

32. A method according to claim 22, wherein the reformer is a catalytic reformer.

33. A method according to claim 22, wherein the reformer is a non-catalytic reformer.

34. A method for operating a fuel reformer system under start-up conditions, the fuel reformer system comprising:
a) a start burner;
b) a fuel reformer to which hydrocarbon fuel, air and water are provided; and which produces a hydrogen containing gas stream;
c) an absorber downstream of the reformer for absorbing unreacted hydrocarbon at a first temperature, and releasing the hydrocarbon at a second temperature;
d) a fuel cell; and
e) an anode burner;
the steps comprising:
1) initiate start burner operation by supplying fuel and air to the start burner;
2) judge the startup complete when a target temperature is reached at the anode burner;
3) stop supply of fuel and air to the start burner;
4) start supply of fuel, air and water to the reformer, fuel cell and anode burner;
5) calculate absorption quantity of fuel by adding current fuel release quantity to a previously memorized predetermined fuel release quantity;
wherein
(a) if the calculated hydrocarbon absorption quantity exceeds the predetermined allowable fuel absorption quantity;
absorbed hydrocarbon is released and purified; or
(b) if the calculated hydrocarbon absorption quantity does not exceed the predetermined fuel absorption quantity;
operation shifts to normal operation, to prevent wasteful consumption of hydrocarbon due to the fuel release purification process.
6) judge the necessary release time for the fuel, the necessary time being predetermined, and measuring the fixed time;
7) releasing the fuel for purification in the anode burner;
8) memorizing the absorption quantity as zero; and
9) shifting operation to normal operation.

35. A method according to claim 34, wherein a water shift gas reactor is provided downstream of the reformer to convert carbon monoxide and water to carbon dioxide and hydrogen.

36. A method according to claim 35, wherein a first oxidizer is provided downstream of the reformer to react oxygen with the hydrogen-containing gas stream from the reformer.

37. A method according to claim 36, wherein a second oxidizer is provided downstream of the absorber to react oxygen with the hydrocarbons released from the absorber.
